# EUROPÄISCHE PATENTANMELDUNG

(11) **EP 2 463 006 A1**
(43) Veröffentlichungstag der Anmeldung: **13.06.2012**
(21) Anmeldenummer: 11191358.8
(22) Anmeldetag: 30.11.2011
(51) Int. Cl.: B01D 35/16, B01D 35/30, B01D 36/00

(54) **Filtereinrichtung**

(30) Priorität: 10.12.2010 DE 102010062846
(71) Anmelder: Mahle International GmbH, 70376 Stuttgart (DE)
(72) Erfinder: Dunsch, Robert, 71665 Vaihingen (DE)
(74) Vertreter: BRP Renaud & Partner

(57) **Zusammenfassung**

Die Erfindung betrifft eine Filtereinrichtung (1) mit zumindest in einem Filtergehäuse (2) angeordneten Filterelement und einer gehäuseseitigen Ablassöffnung (4) mit Schraubverschlussteil (5). Erfindungswesentlich ist dabei,
- dass das Schraubverschlussteil (5) ein Außengewinde (6) aufweist, an dem in Einschraubrichtung (7) axial abstehend zumindest ein federndes Rastelement (8,8') angeordnet ist,
- dass das wenigstens eine Rastelement (8,8') im Zusammenwirken mit wenigstens einer gehäuseseitigen Gegenrast (9,9') einen fühl- und/oder hörbaren Rasthub ausführt, wenn das Schraubverschlussteil (5) eine absperrwirksame Solllage erreicht.

## Beschreibung

Die vorliegende Erfindung betrifft eine Filtereinrichtung mit zumindest einem in einem Filtergehäuse angeordneten Filterelement und einer gehäuseseitigen Ablassöffnung mit Schraubverschlussteil gemäß dem Oberbegriff des Anspruchs 1. Die Erfindung betrifft außerdem ein Schraubverschlussteil für eine derartige Filtereinrichtung.

Gattungsgemäße Filtereinrichtungen sind hinlänglich bekannt und weisen ebenfalls in bekannter Weise eine sogenannte Ablassschraube auf, die dem gattungsgemäßen Schraubverschlussteil entspricht und die eine insbesondere bodenseitig angeordnete Ablassöffnung beim Betrieb der Filtereinrichtung verschließt. Zum turnusmäßigen Ablassen der Flüssigkeit muss das Schraubverschlussteil, das heißt die Ablassschraube, jedoch herausgedreht und die Flüssigkeit abgelassen werden. Damit das Schraubverschlussteil beim normalen Filterbetrieb, in welchem auch nicht unerhebliche Vibrationen auftreten können, in seiner Schließlage verbleibt, muss es in der Regel mit hinreichendem Drehmoment in seine Schließlage gedreht werden, was einen vergleichsweise aufwändigen und hinsichtlich eines genauen Drehmoments schwierigen Prozess darstellt.

Die vorliegende Erfindung beschäftigt sich daher mit dem Problem, für eine Filtereinrichtung der gattungsgemäßen Art eine verbesserte oder zumindest eine alternative Ausführungsform anzugeben, mit welcher die aus dem Stand der Technik bekannten Nachteile vermieden werden können.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein Schraubverschlussteil, beispielsweise eine Ablassschraube, sowie eine gehäuseseitig an einer Filtereinrichtung angeordnete Ablassöffnung mit zumindest einem Rastelement bzw. zumindest einer gehäuseseitigen Gegenrast auszustatten, wobei das wenigstens eine Rastelement einen fühl- oder hörbaren Rasthub ausführt, sofern das Schraubverschlussteil eine absperrwirksame Solllage erreicht. Das Schraubverschlussteil erreicht somit eine absperrwirksame Position bereits vor Erreichen seiner eigentlichen Schraubendlage in bzw. am zugeordneten gehäuseseitigen Gewinde, was durch den erwähnten Rasthub haptisch und/oder akustisch wahrnehmbar ist. Hierzu weist das Schraubverschlussteil ein Außengewinde aufweist, an dem in Einschraubrichtung axial abstehend zumindest ein federndes Rastelement angeordnet ist, das im Zusammenwirken mit wenigstens einer gehäuseseitigen Gegenrast den fühl- und/oder hörbaren Rasthub ausführt. Durch die fühl- bzw. hörbare Verrastung kann sichergestellt werden, dass eine durch Selbsthemmung hinreichend gesicherte Lage tatsächlich erreicht worden ist. Neben dem Anzeigen des Erreichens der langfristig sicheren Absperrlage erfüllt das zumindest eine Rastelement am Schraubverschlussteil sowie das zumindest eine gehäuseseitige Gegenrastelement die Funktion einer Lösesicherung, so dass ein beispielsweise durch Vibrationen hervorgerufenes, unerwünschtes Öffnen zuverlässig vermieden werden kann. Letzteres ist insbesondere im Hinblick auf eine mögliche Kontamination einer Umgebung wichtig.

Bei einer vorteilhaften Weiterbildung der erfindungsgemäßen Lösung, sind am Schraubverschlussteil zwei sich gegenüberliegende Rastelemente vorgesehen, die sich im Wesentlichen radial gegenüberliegen und die axial federnd sind. Das Vorsehen zumindest zweier sich gegenüberliegender Rastelemente mit zugehörigen gehäuseseitigen Gegenrasten verstärkt das haptische bzw. akustische Wahrnehmen des Erreichens der absperrwirksamen Solllage und verstärkt zudem zusätzlich den Sicherungseffekt gegen ein unerwünschtes Lösen. Selbstverständlich können dabei an dem Schraubverschlussteil in Umfangsrichtung noch weitere Rastelement vorgesehen werden.

Bei einer vorteilhaften Weiterbildung der erfindungsgemäßen Lösung, ist das zumindest eine Rastelement einstückig mit dem Schraubverschlussteil ausgebildet, insbesondere dann, sofern das Schraubverschlussteil als Kunststoffspritzgussteil gefertigt wird. Einstückig mit dem Schraubverschlussteil ausgebildetes Rastelement bietet den großen Vorteil, dass keine zusätzliche und aufwändige Montage des wenigstens einen Rastelements am Schraubverschlussteil erfolgen muss, sondern dieses zusammen mit dem Schraubverschlussteil in einem einzigen, gemeinsamen Arbeitsschritt gefertigt werden kann. Besonders einfach und rationell ist dies möglich, sofern das Schraubverschlussteil als Kunststoffspritzgussteil ausgebildet ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht von unten auf einen Filtergehäusetopf sowie eine Ansicht von der Seite ein Schraubverschlussteil und Schnittdarstellungen durch unterschiedliche Ausführungsformen des Filtergehäusetopfs,
- Fig. 2: unterschiedliche Ansichten auf das Schraubverschlussteil.

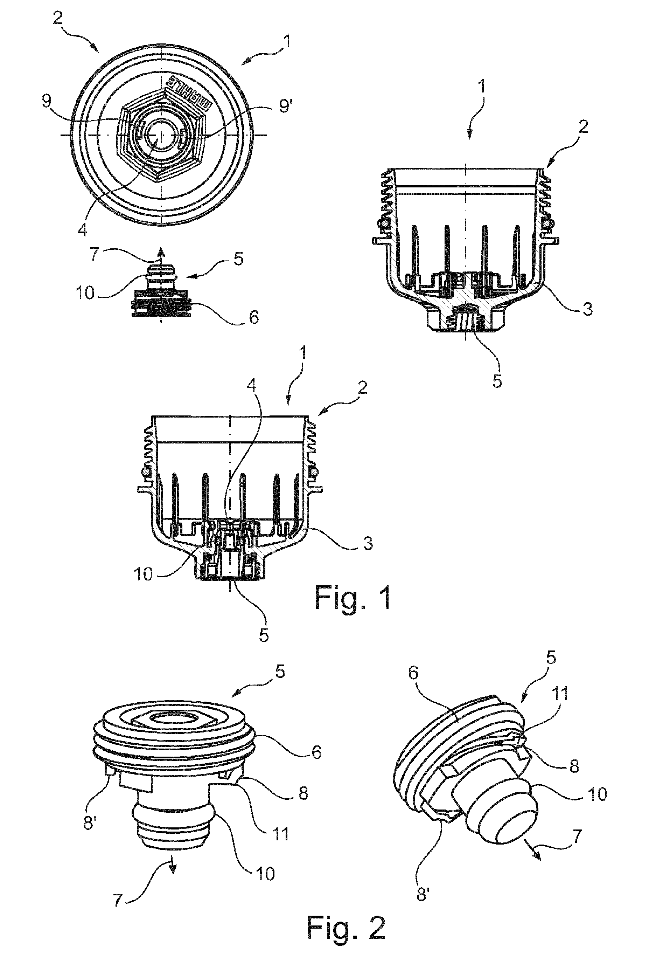

Entsprechend der Fig. 1, weist eine erfindungsgemäße Filtereinrichtung 1, ein Filtergehäuse 2 auf, in welchem üblicherweise ein nicht dargestelltes Filterelement angeordnet ist. Vom Filtergehäuse 2 dargestellt ist ein Filtergehäusetopf 3, an dem bodenseitig eine Ablassöffnung 4 vorgesehen ist, die mit einem Schraubverschlussteil 5 (vgl. auch die Fig. 2) verschlossen werden kann. Betrachtet man insbesondere die Fig. 2, so kann man erkennen, dass das Schraubverschlussteil 5 ein Außengewinde 6 aufweist, an dem in Einschraubrichtung 7 axial abstehend, zumindest ein, hier zwei federnde Rastelemente 8 und 8' angeordnet sind. Die beiden Rastelemente 8 und 8' führen dabei im Zusammenwirken mit wenigstens einer gehäuseseitigen Gegenrast 9, 9' eine fühl- und/oder hörbaren Rasthub aus, sofern das Schraubverschlussteil 5 eine absperrwirksame Solllage im Filtergehäusetopf 3 erreicht hat. Das Schraubverschlussteil 5 ist nach dem Erreichen der Solllage fixiert, das heißt insbesondere durch eine Selbsthemmung festgehalten. Betrachtet man die Fig. 2, so kann man erkennen, dass sich die beiden Rastelemente 8 und 8' gegenüberliegen und vorzugsweise einstückig mit dem Schraubverschlussteil 5 ausgebildet sind. Letztere Ausführungsform ist insbesondere bei einem aus Kunststoff ausgebildeten Schraubverschlussteil 5 rationell darstellbar, sofern dieses als Kunststoffspritzgussteil ausgebildet ist.

Generell ist das dargestellte Rastelement 8, 8' als Bügel ausgebildet, der an seinen beiden Enden mit einem Gewindebereich, das heißt mit dem Außengewinde 6 des Schraubverschlussteils 5 verbunden ist. Die Filtereinrichtung 1 kann generell als Kraftstoff- oder Schmierstofffilter ausgebildet sein.

Die im Filtergehäusetopf 3 angeordneten Gegenrasten 9 und 9' könnten rein theoretisch auch im Schraubverschlussteil 5 angeordnet sein, wobei dann die beiden zugehörigen Rastelemente 8, 8' am Filtergehäusetopf 3 angeordnet wären.

Mit dem erfindungsgemäßen Schraubverschlussteil 5 ist es möglich, dieses dicht und ohne zu hohes Drehmoment in die Ablassöffnung 4 einzuschrauben, wobei das Erreichen der absperrwirksamen Solllage akustisch und/oder haptisch angezeigt wird. Bei der Ausbildung des Schraubverschlussteils 5 als Kunststoffspritzgussteil können die Rastelemente 8, 8' kostengünstig und fertigungstechnisch einfach angeformt werden, ebenso wie die Gegenrasten 9, 9' im Filtergehäusetopf 3. Beim Erreichen der absperrwirksamen Solllage, das heißt beim Verrasten der Rastelemente 8, 8' mit dem Gegenrasten 9, 9' befindet sich eine Dichtung 10 bereits dicht in die Ablassöffnung 4 eingeführt, so dass in diesem Zustand Schraubverschlussteil 5 die Ablassöffnung 4 komplett verschließt.

Betrachtet man die Rastelemente 8, 8' gemäß dem Schraubverschlussteil 5 in der Fig. 2, so kann man erkennen, dass eine Rastspitze 11 in Einschraubrichtung 7 über das Rastelement 8 vorsteht, wobei der Vorstand ca. 1 mm beträgt. Das heißt bei vollständig sich in seiner Solllage befindlichem Schraubverschlussteil 5 greift die Rastspitze 11 ca. 1 mm tief in die Gegenrast 9, 9' am Filtergehäusetopf 3 ein, wobei die Steigung zur Rastspitze 11 drehrichtungsabhängig ausgebildet ist, das heißt ein Verrasten der Rastelemente 8, 8' mit den zugehörigen Gegenrasten 9, 9' leichter möglich ist als ein Endrasten derselben. Hierdurch wir eine effektive Lösesicherung erreicht.

## Patentansprüche

1. Filtereinrichtung (1) mit zumindest einem in einem Filtergehäuse (2) angeordneten Filterelement und einer gehäuseseitigen Ablassöffnung (4) mit Schraubverschlussteil (5),
**dadurch gekennzeichnet,**
- **dass** das Schraubverschlussteil (5) ein Außengewinde (6) aufweist, an dem in Einschraubrichtung (7) axial abstehend zumindest ein federndes Rastelement (8,8') angeordnet ist,
- **dass** das wenigstens eine Rastelement (8,8') im Zusammenwirken mit wenigstens einer gehäuseseitigen Gegenrast (9,9') einen fühl- und/oder hörbaren Rasthub ausführt, wenn das Schraubverschlussteil (5) eine absperrwirksame Solllage erreicht.

2. Filtereinrichtung nach Anspruch 1,
**dadurch gekennzeichnet,**
**dass** das Schraubverschlussteil (5) im Bereich der Solllage durch Selbsthemmung festgehalten wird.

3. Filtereinrichtung nach Anspruch 1 oder 2,
**dadurch gekennzeichnet,**
**dass** zwei sich vorzugsweise gegenüberliegende Rastelemente (8,8') vorgesehen sind.

4. Filtereinrichtung nach einem der Ansprüche 1 bis 3,
**dadurch gekennzeichnet,**
**dass** die Rastelemente (8,8') einstückig mit dem Schraubverschlussteil (5) ausgebildet sind.

5. Filtereinrichtung nach einem der Ansprüche 1 bis 4,
**dadurch gekennzeichnet,**
**dass** das Schraubverschlussteil (5) aus Kunststoff, insbesondere als Kunststoffspritzgussteil, ausgebildet ist.

6. Filtereinrichtung nach einem der Ansprüche 1 bis 5,
**dadurch gekennzeichnet,**
**dass** die Filtereinrichtung (1) als Kraftstoff- oder Schmierstofffilter ausgebildet ist.

7. Schraubverschlussteil (5) für eine Filtereinrichtung (1) nach einem der Ansprüche 1 bis 6.
